# EUROPEAN PATENT APPLICATION

(11) **EP 4 722 495 A1**
(43) Date of publication of application: **08.04.2026**
(21) Application number: 25205873.0
(22) Date of filing: 30.09.2025
(51) Int. Cl.: F01D 5/00, F01D 21/00, F01D 25/28, B23P 6/00, G01N 29/04, G01N 29/12, G01N 29/265

(54) **GAS TURBINE ENGINE WITH INSPECTION PORT AND METHOD FOR USING THE SAME**

(30) Priority: 30.09.2024 US 202418902164
(71) Applicant: RTX Corporation, Farmington, CT 06032 (US)
(72) Inventor: FREIBERG, Douglas P., South Glastonbury, 06073 (US); SIDWELL, Carroll V., Wethersfield, 06109 (US); CHAUDHRY, Zaffir, Portland, 06032 (US)
(74) Representative: Dehns

(57) **Abstract**

A gas turbine engine (22) is provided that includes a compressor section (26), a combustor section (28), a turbine section (30), and an inspection port (74). The turbine section (30) includes a rotor stage (66A,B) and a stator vane stage (64A.B). A core gas path (36) extends through the compressor section (26), the combustor section (28), and the turbine section (30). The inspection port (74) is disposed within the turbine section (30). The inspection port is configured to provide access through a portion of the core gas path (36) that extends within the turbine section (30) and to a component disposed radially inside of the portion of the core gas path (36) that extends within the turbine section (30).

## Description

### TECHNICAL FIELD

This disclosure relates to gas turbine engines in general and, more particularly, to gas turbine engines and methods of non-destructive inspection of internal gas turbine engine components.

### BACKGROUND

Various systems and methods are known in the art for inspecting a component of a gas turbine engine for internal defects. While these known inspection systems and methods have various benefits, there is still room in the art for improvement.

### SUMMARY OF THE DISCLOSURE

According to an aspect of the present invention, a gas turbine engine is provided that includes a compressor section, a combustor section, a turbine section, and an inspection port. The turbine section includes a rotor stage and a stator vane stage. A core gas path extends through the compressor section, the combustor section, and the turbine section. The inspection port is disposed within the turbine section. The inspection port is configured to provide access through a portion of the core gas path that extends within the turbine section and to a component disposed radially inside of the portion of the core gas path that extends within the turbine section.

In an embodiment of the above, the inspection port may include an outer inspection port engaged with an outer radial boundary structure of the core gas path that extends within the turbine section, and an inner inspection port engaged with an inner radial boundary structure of the core gas path that extends within the turbine section.

In any of the aspects or embodiments described above and herein, the outer inspection port may include an outer inspection port access passage and an outer inspection port plug, and the inner inspection port may include an inner inspection port access passage and an inner inspection port plug.

In any of the aspects or embodiments described above and herein, the outer radial boundary structure of the core gas path that extends within the turbine section may include an engine case.

In any of the aspects or embodiments described above and herein, the outer radial boundary structure of the core gas path core gas path that extends within the turbine section may include a stator vane outer platform.

In any of the aspects or embodiments described above and herein, the inner radial boundary structure of the core gas path that extends within the turbine section may include a stator vane inner platform.

In any of the aspects or embodiments described above and herein, the outer inspection port access passage and the inner inspection port access passage may be aligned with one another.

In any of the aspects or embodiments described above and herein, the outer inspection port and the inner inspection port may be disposed circumferentially between a pair of adjacent vanes of the stator vane stage.

In any of the aspects or embodiments described above and herein, at least a portion of the inspection port may extend through a vane of a stator vane stage.

In any of the aspects or embodiments described above and herein, the portion of the inspection port extending through the vane of the stator vane stage, or the vane, may define a passage configured to prevent transfer of gas between the passage and an interior region of the vane.

According to another aspect of the present invention, a method of inspecting a component within a gas turbine engine is provided. The component comprises a solid metallic material. The method includes: extending a transducer through an inspection port that provides access through a core gas path of the gas turbine engine to a component disposed radially inside of the core gas path, wherein the transducer is configured to perform an inspection of a metallic component disposed radially inside of the core gas path; providing a baseline inspection response signal that is produced by using the transducer to perform an initial inspection of the metallic component, the initial inspection including transmitting a first initial signal into the metallic component and sensing the metallic component for a second initial signal produced as a result of the first initial signal being transmitted into the metallic component, wherein the baseline inspection response signal is representative of the second initial signal and is unique to the metallic component; using the transducer to inspect the metallic component, the inspection including transmitting a first signal into the metallic component and sensing the metallic component for a second signal produced as a result of the first signal being transmitted into the metallic component, and producing an inspection response signal representative of the second signal; and evaluating the inspection response signal to determine the presence or absence of a defect in the metallic component using the baseline response signal.

In an embodiment of the above, the inspection port may include an outer inspection port engaged with an outer radial boundary structure of the core gas path, and an inner inspection port engaged with an inner radial boundary structure of the core gas path.

In any of the aspects or embodiments described above and herein, the outer inspection port may include an outer inspection port access passage and an outer inspection port plug, and the inner inspection port may include an inner inspection port access passage and an inner inspection port plug.

In any of the aspects or embodiments described above and herein, the outer radial boundary structure of the core gas path may include an outer casing and a stator vane outer platform.

In any of the aspects or embodiments described above and herein, the inner radial boundary structure of the core gas path may include a stator vane inner platform.

In any of the aspects or embodiments described above and herein, the component may be a disk of a rotor stage.

According to another aspect of the present invention, a gas turbine engine is provided that includes a compressor section, a combustor section, a turbine section, and an inspection port. The turbine section includes a rotor stage and a stator vane stage. The core gas path extends through the compressor section, the combustor section, and the turbine section. The inspection port is disposed within the compressor section. The inspection port is configured to provide access through a portion of the core gas path that extends within the compressor section and to a component disposed radially inside of the portion of the core gas path that extends within the compressor section.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 is a diagrammatic illustration of an airplane having gas turbine engines with which the present disclosure may be used.
FIG. 2 is a diagrammatic illustration of a gas turbine engine with which the present disclosure may be used.
FIG. 3 is a diagrammatic view of an embodiment of a present disclosure inspection scope engaged with a component.
FIG. 3A is a diagrammatic enlarged view of an inspection scope head embodiment.
FIG. 4 is a graph of response signal data versus signal amplitude.
FIG. 5 is a graph of response signal data versus signal amplitude, illustrating a shift in response signal data.
FIG. 6 is a diagrammatic sectional view of a gas turbine engine turbine section.
FIG. 7 is a diagrammatic view of a stator vane segment.
FIG. 7A is a sectional view of the stator vane segment shown in FIG. 7.
FIG. 8 is a diagrammatic view of an exemplary inspection port embodiment.

### DETAILED DESCRIPTION

Aspects of the present disclosure are directed to an inspection system for non-destructive inspecting a component within a gas turbine engine. Other aspects of the present disclosure are directed to a gas turbine engine configured to provide inspection scope access to rotor disks disposed radially inside of a core gas path of the engine. The present disclosure is applicable to gas turbine engines used in a variety of applications (e.g., land-based applications, marine applications, aircraft applications, and the like) and therefore is not limited to any particular gas turbine application. However, the present disclosure provides particular utility for inspecting gas turbine engines mounted on an aircraft. The aircraft may be an airplane, a helicopter, a drone (e.g., an unmanned aerial vehicle (UAV)) or any other manned or unmanned aerial vehicle.

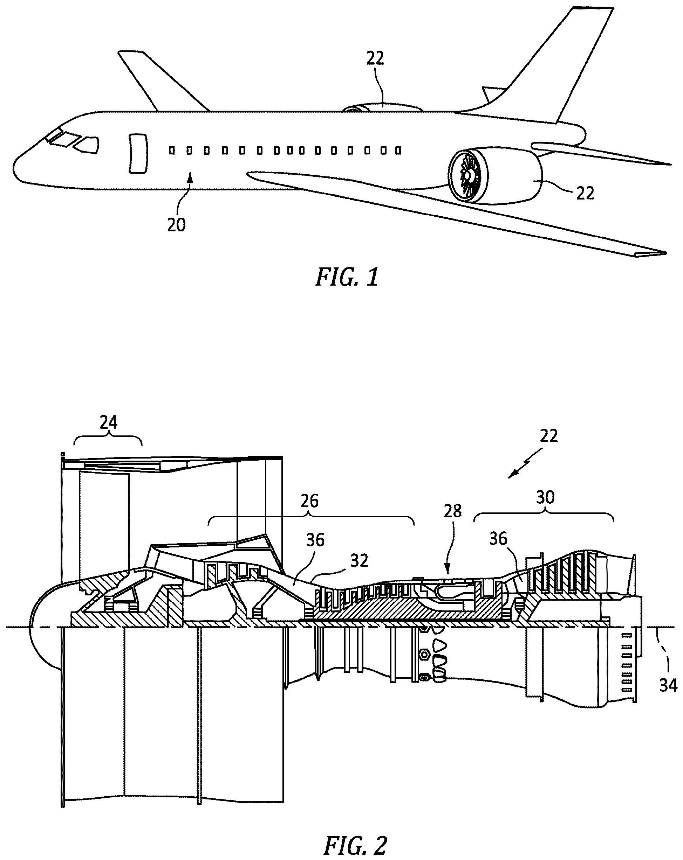

FIG. 1 illustrates an aircraft 20 in the form of an airplane having a pair of gas turbine engines 22. The gas turbine engine 22 may be a turbofan engine, a turbojet engine, a turboprop engine, a turboshaft engine, or any other type of gas turbine engine. FIG. 2 diagrammatically illustrates a turbofan gas turbine engine 22 having a fan section 24, a compressor section 26, a combustor section 28, a turbine section 30, an engine case 32, and an axial centerline 34. Air drawn into the engine 22 through the fan section 24 is compressed within the compressor section 26. Fuel is added in the combustor section 28 and combusted. The combustion products and air (that has not participated in the combustion) are passed into the turbine section 30, powering the turbine section 30. The turbine section 30, in turn, drives the compressor and fan sections 24, 26. A core gas path 36 is formed internally within the engine 22, extending through the compressor, combustor, and turbine sections 26, 28, 30. In the gas turbine engine 22 shown in FIG. 2, the fan section 24 is "forward" of the compressor section 26 and the turbine section 30 is "aft" of the compressor section 26. The terms "inner radial" and "outer radial" refer to relative radial positions from the engine axial centerline 34. An inner radial component or path is disposed radially closer to the engine axial centerline 34 than an outer radial component or path. The gas turbine engine 22 described above and shown in FIG. 2 is configured to provide propulsion to the aircraft 20. Embodiments of the present disclosure may also include a gas turbine engine 22 that is part of a hybrid-electric power (HEP) propulsion system, or a part of an auxiliary power unit (APU), or a gas turbine engine that utilizes a bottom cycle or a topping cycle, or the like. Gas turbine engines incorporating embodiments of the present disclosure may use a variety of different fuels including conventional fuels (e.g., Jet A, Jet A1, Jet B, or the like) or alternative fuels including sustainable aviation fuels (SAF), hydrogen, or the like, or any combination thereof.

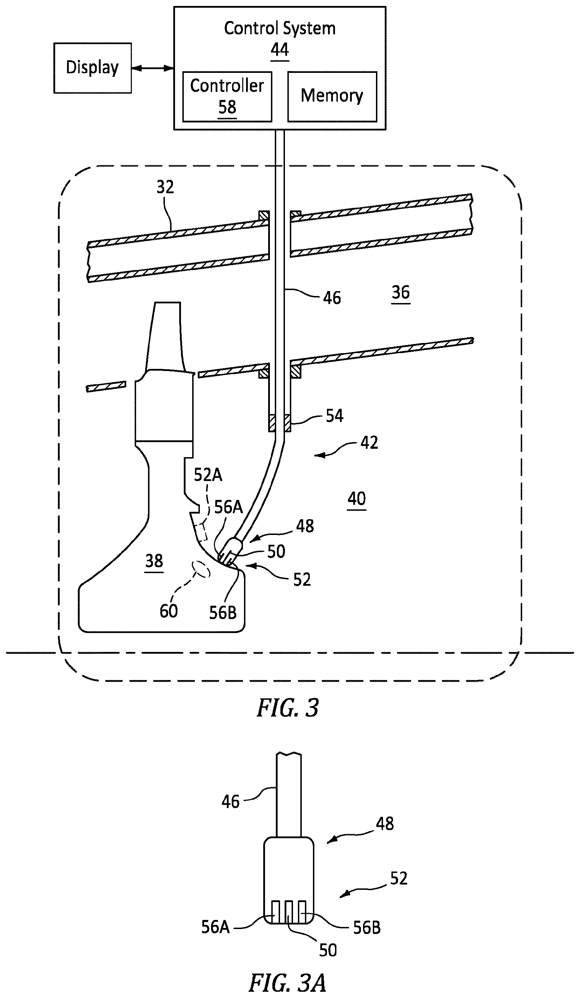

The inspection system 21 is configured to facilitate inspection of a gas turbine engine component while the gas turbine engine 22 is mounted on an aircraft 20. FIG. 3 diagrammatically illustrates an inspection system 21 engaged with a rotor disk 38 disposed within an interior region 40 of the gas turbine engine 22; e.g., the rotor disk 38 is disposed radially inside of the core gas path 36. As will be detailed herein, embodiments of the present disclosure permit inspection scope access to an inner radial region of the gas turbine engine 22 thereby enabling inspection of a rotor disk (or other componentry) disposed radially inside of the core gas path 36. The access may be accomplished in a variety of different ways, including but not limited to access paths that extend radially or tangentially relative to the axial centerline 34 of the engine. The present disclosure inspection system 21 provides operational flexibility that allows gas turbine engine components to be inspected in a variety of different settings; e.g., on the airport tarmac between aircraft flights, and/or at a dedicated inspection and/or repair facility. The present disclosure inspection system 21 consequently makes it possible to perform an inspection with a relatively short aircraft downtime and/or a relatively minimal expense. The inspection system 21, of course, may also be used for inspecting a gas turbine engine component installed within the engine 22 when that engine 22 is not installed on an aircraft 20 (e.g., prior to installation with the aircraft 20 or following removal from the aircraft 20) and/or when the gas turbine engine 22 is partially disassembled into one or more sub-assemblies.

The gas turbine engine component to be inspected may be any metallic component within the engine 22. The present disclosure provides considerable utility, for example, in the inspection of rotor disks (e.g., a rotor disk within a turbine rotor stage, or a compressor rotor stage, or the like) within the gas turbine engine 22. To facilitate the description herein, the present disclosure will be described in terms of inspecting a gas turbine engine rotor disk 38. To be clear, the present disclosure inspection system 21 is not limited to inspecting rotor disks.

The example inspection system 21 may include an electronic inspection scope 42 and in some embodiments may include a control system 44. The inspection scope 42 may utilize any sensing technology (e.g., ultrasonic, acoustic, or the like) that can be used to sense an undesirable defect or anomaly within the material of the component (e.g., rotor disk 38) being sensed. FIG. 3 illustrates a non-limiting embodiment of an inspection scope 42 that includes a scope body 46, a scope head 48, a scope positional sensor 50, and a transducer 52. The inspection scope 42 may also include structure for positionally fixing at least a part of the inspection scope 42; e.g., an expandable mount 54. The expandable mount 54 may be configured to facilitate biasing the scope head 48 against a surface of a component (e.g., a rotor disk 38) with a selective amount of preload force. The preload force facilitates the operation of a transducer 52 such as a piezoelectric actuator that produces and receives ultrasonic signals, maintaining physical contact between the transducer 52 and the component during operation. In some embodiments, the inspection system 21 may include structure (e.g., a guide tube or the like) for guiding portions of the inspection scope 42 to a desired position relative to the component to be inspected.

The scope body 46 may be configured as a flexible body. The scope body 46 may include one or more internal actuators for manipulating the scope body 46 to aid in maneuvering the scope head 48 within the interior of the gas turbine engine 22 to the component. The scope positional sensor 50 and the transducer 52 may be arranged with (e.g., mounted to and/or disposed in) the scope head 48; e.g., see FIG. 3A. The scope positional sensor 50 (e.g., a camera, a proximity sensor, or the like) may be configured to aid in the maneuvering of the scope head 48 and, more particularly, maneuvering of the transducer 52 towards the component to be inspected; e.g., a rotor disk 38. The transducer 52 may include a signal transmitter 56A and a signal receiver 56B. In some embodiments, the transducer 52 may include a signal transmitter 56A that is independent of the signal receiver 56B; e.g., as diagrammatically shown in FIG. 3A. In some embodiments, the transducer 52 may be configured as a single device that functions as both a transmitter and a receiver. To facilitate the description herein, the transducer 52 will be described as having a signal transmitter 56A that is independent of the signal receiver 56B, but the present disclosure is not limited thereto.

The signal transmitter 56A is configured to emit an excitation signal into the component to be inspected; e.g., a rotor disk 38. A non-limiting example of a signal transmitter 56A that may be used is piezoelectric ultrasonic actuator that produces an ultrasonic excitation signal that may be transmitted into the component. The present disclosure is not limited to using a piezoelectric ultrasonic actuator, and in those embodiments that use a piezoelectric ultrasonic actuator, the present disclosure is not limited to any particular piezoelectric ultrasonic actuator configuration. An example of a piezoelectric ultrasonic actuator that may be used is a piezoelectric stack; sometimes referred to as a "PZT stack". Ultrasonic excitation signals may be in the range of 30-500kHz. In some embodiments, the excitation signals may be produced in particular frequency ranges; e.g., a five kilohertz (5 kHz) range, a ten kilohertz (10 kHz) range, a twenty kilohertz (20 kHz) range, or the like. The present disclosure is not limited to excitation signals in any particular frequency range. As will be detailed in further detail herein, the signal transmitter 56A is in communication with the control system for controlling the operation of the signal transmitter 56A.

The signal receiver 56B is configured to sense a signal within the component (e.g., a rotor disk 38) that is produced in response to the emitted excitation signal and to produce a transducer response signal representative of the sensed signal. As will be detailed in further detail herein, the signal receiver 56B is in communication with the control system; e.g., response signals produced by the signal receiver 56B are provided to control system for processing.

In some embodiments, the inspection scope 42 may be configured for use with an inspection mechanism that uses a transducer module 52A (which may be referred to as a "patch") that is remote from the inspection scope 42. For example, in some embodiments, a transducer module 52A may be configured for attachment to a component (e.g., a rotor disk 38) and configured for remote activation via a signal; e.g., an electronic signal provided by the inspection scope 42. FIG. 3 diagrammatically illustrates a transducer module 52A in dashed line attached to a rotor disk 38. In this embodiment, the transducer module 52A may be configured to receive an activation signal (from the inspection scope 42) that switches the transducer module 52A from an "off configuration" to an "on configuration". In the on configuration, a signal transmitter (e.g., a piezoelectric ultrasonic actuator, or other signal generator) may be activated to produce excitation signals. In some embodiments, the signal transmitter may be configured to produce excitation signals relating to multiple modes of excitation; e.g., as a result of control signals received from the inspection scope 42. Response signals resulting from applied excitation signals may be received by the transducer module 52A and those response signals (or other signals representative of the response signals) may be passed from the transducer module 52A to the signal receiver 56B within the inspection scope head 48, or alternatively, the signal receiver 56B within the inspection scope head 48 may directly receive the response signals.

The above described inspection scopes 42 are examples of an inspection scope that may be used with the present disclosure but the present disclosure is not limited to using these exemplary inspection scopes 42.

The control system 44 includes a signal processing device (referred to herein as a "controller 58") that is in communication with other inspection system 21 components such as the signal transmitter 56A and the signal receiver 56B; e.g., to control the operation of the respective inspection system 21 component and/or to receive signals from and/or transmit signals to that inspection system 21 component to perform the functions described herein. The controller 58 may include any type of computing device, computational circuit, processor(s), CPU, computer, or the like capable of executing a series of instructions that are stored in memory. The instructions may include an operating system, and/or executable software modules such as program files, system data, buffers, drivers, utilities, and the like. The executable instructions may apply to any functionality described herein to enable the inspection system 21 to accomplish the same algorithmically and/or coordination of system components. The controller 58 includes or is in communication with one or more memory devices. The present disclosure is not limited to any particular type of memory device, and the memory device may store instructions and/or data in a non-transitory manner. Examples of memory devices that may be used include read-only memory, random access memory, volatile memory, non-volatile memory, static memory, dynamic memory, flash memory, cache memory, and/or any device that stores digital information. The controller 58 may include, or may be in communication with, an input device (not shown) that enables a user to enter data and/or instructions, and may include, or be in communication with an output device configured, for example to display information (e.g., a visual display as diagrammatically shown in FIG. 3, or a printer, or the like), or to transfer data, etc. Communications between the controller 58 and other inspection system 21 components may be via a hardwire connection or via a wireless connection. The control system 44 may include other components (e.g., signal processing hardware such as amplifiers, filters, analog to digital converters, or the like) in addition to or as an alternative to the components described herein.

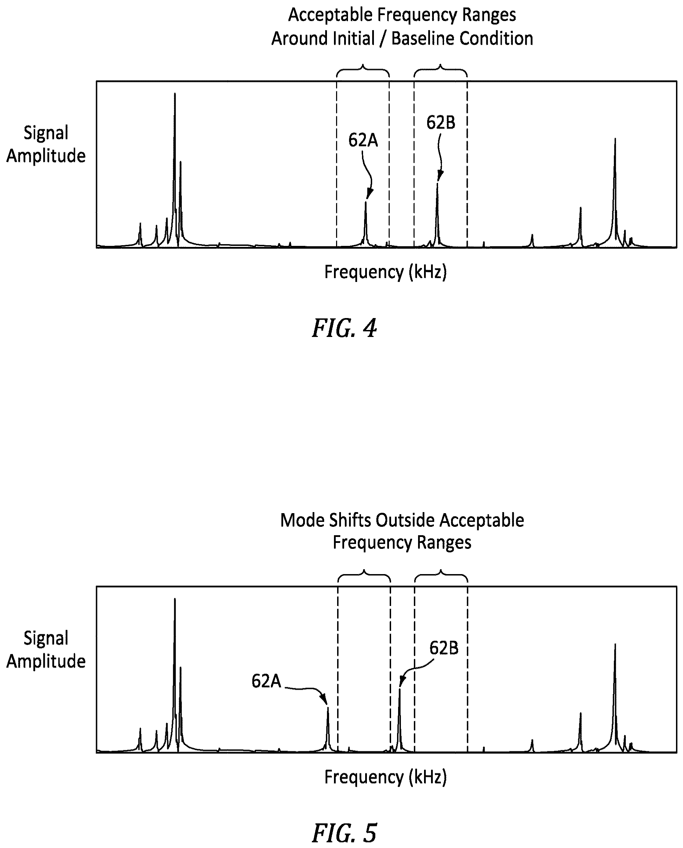

The transducer response signals may be processed to evaluate physical characteristics of a component. For example, individual frequency peaks of the transducer response signals may be evaluated.. FIGS. 4 and 5 diagrammatically illustrate response signal data graphs of frequency versus signal amplitude for a specific (serial number) component. Each graph diagrammatically illustrates two signal peaks (a first peak 62A and a second peak 62B) within a frequency range of inspection response signal data. Each graph illustrates acceptable frequency range boundaries for each frequency peak; e.g., a lower acceptable boundary and a higher acceptable boundary for each frequency peak. In FIG. 5, it can be seen that the signal peaks 62A, 62B have shifted to the left (i.e., decreased in frequency) relative to their position in FIG. 4, and are now both outside of the respective acceptable frequency range boundaries. The mode shift of the signal peaks 62A, 62B to decreased frequencies is a non-limiting diagrammatic example of a response signal change indicative of a change in the physical properties of the component. The shift in signal data may or may not be indicative of a defect, but they are indicative of a change in the physical properties of the component. The present disclosure may use the identification of the signal differences to flag a technician to the possible presence of a defect. The graphs of FIGS. 4 and 5 are provided to illustrate an example of how response signal data may be evaluated and/or processed, and the present disclosure is not limited to this example.

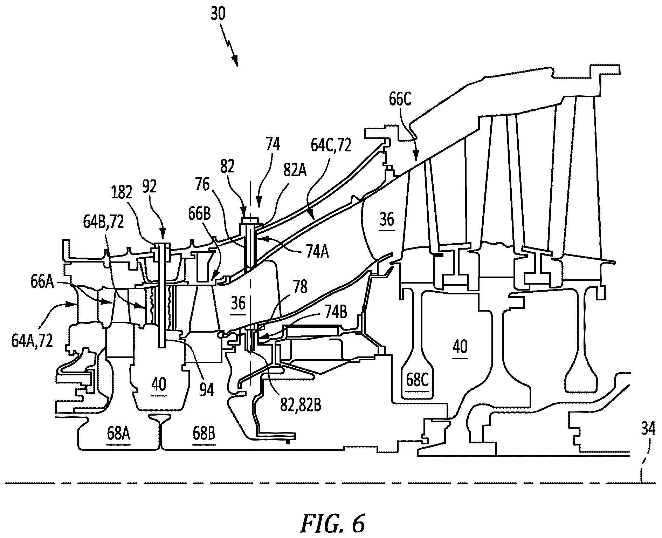

Embodiments of the present disclosure include inspection ports (e.g., see FIG. 6 - first inspection port 74, second inspection port 92) that are configured to permit an inspection scope 42 to access portions of a rotor disk (and/or other componentry) disposed radially inside of the core gas path 36. Inspection ports of which we are aware provide access into the core gas path 36 so that an inspection scope 42 can be inserted into the core gas path 36 for the purpose of inspecting stator vanes, rotor blades, or other components exposed within the core gas path 36. These inspection ports either do not permit access to portions of a rotor disk disposed radially inside of the core gas path 36, or such access is difficult to achieve and/or limited in scope. Embodiments of the present disclosure include inspection ports that greatly facilitate inspection scope 42 access to portions of a rotor disk disposed radially inside of the core gas path 36. The present disclosure is described herein in the context of an inspection scope 42 disposed within the turbine section 30 of a gas turbine engine 22. The present disclosure is not limited to use within a turbine section 30 and may be used within a compressor section 26 alternatively, or in both.

Referring to FIG. 6, a diagrammatic sectional view of a gas turbine engine turbine section 30 is shown. The turbine section 30 includes a plurality of stator vane stages, including a turbine inlet guide vane stage 64A, a second turbine vane stage 64B, and a third turbine vane stage 64C. The turbine section 30 further includes a plurality of rotor stages, including a first turbine rotor stage 66A (with a first turbine rotor stage disk 68A), a second turbine rotor stage 66B (with a second turbine rotor stage disk 68B), and a third turbine rotor stage 66C (with a third turbine rotor stage disk 68C). The turbine inlet guide vane stage 64A is disposed forward of the first turbine rotor stage 66A, the second turbine vane stage 64B is disposed between the first and second turbine rotor stages 66A, 66B, and the third turbine vane stage 64C is disposed between the second and third turbine rotor stages 66B, 66C.

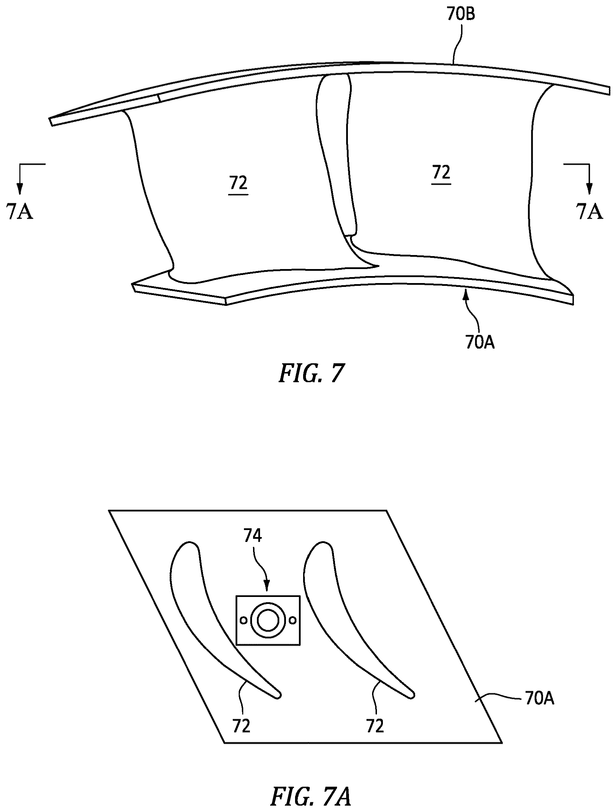

Each turbine vane stage 64A-C includes a plurality of stator vanes (i.e., airfoils) that extend between an inner platform and an outer platform. FIG. 7 illustrates a stator vane doublet (i.e., a stator vane segment) that includes an inner platform 70A, an outer platform 70B, and a pair of vanes 72 that extend there between. A stator vane segment may include only one vane 72 or more than one vane 72. A plurality of the stator vane segments collectively form the annular stator vane stage. The present disclosure is not limited to use with any particular vane segment configuration within a stator vane stage. FIG. 7A is a diagrammatic sectional view of the stator vane doublet shown in FIG. 7.

A first inspection port embodiment 74 is diagrammatically shown in FIG. 6 disposed between the second turbine rotor stage 66B and the third turbine stator vane stage 64C. The present disclosure is not limited to disposing a first inspection port 74 embodiment between a rotor stage and a stator vane stage; i.e., forward or aft of the stator vane stage. FIG. 7A diagrammatically illustrates a first inspection port 74 embodiment disposed between adjacent stator vanes 72 within a stator vane stage.

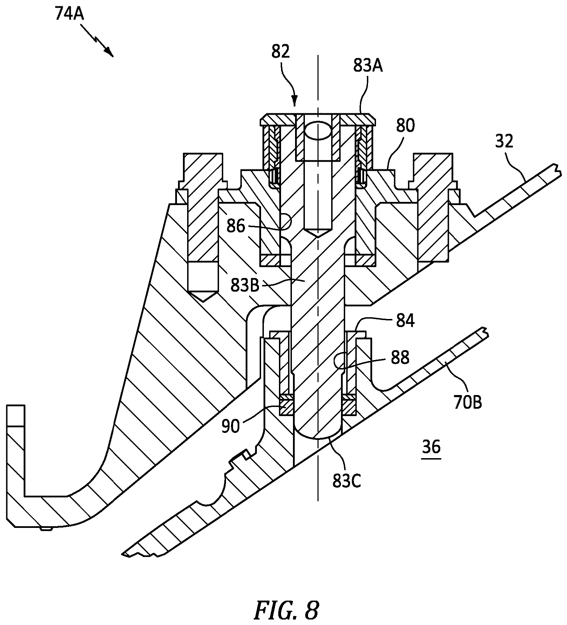

Referring back to FIG. 6, the first inspection port 74 includes an outer inspection port component 74A and an inner inspection port component 74B. The outer inspection port 74A component defines an outer inspection port access passage 76 through an outer radial boundary structure of the core gas path 36 and the inner inspection port component 74B defines an inner inspection port access passage 78 through an inner radial boundary structure of the core gas path 36. The present disclosure may utilize any inspection port configuration that can operate / be used in the manner described herein. FIG. 8 diagrammatically illustrates a non-limiting example of an inspection port component.

The non-limiting example of an inspection port component 74A diagrammatically shown in FIG. 8 is engaged with an outer engine case 32 and an outer platform 70B of a stator vane segment; e.g., an outer inspection port component 74A engaged with the outer radial boundary structure of the core gas path 36. An inspection port configuration like that diagrammatically shown in FIG. 8 may also be used as the inner inspection port component 74B of the first inspection port 74.

The inspection port component 74A includes a sleeve 80, a plug 82, and a bushing 84. The sleeve 80 is attached to the outer engine case 32 and includes a sleeve bore 86. The bushing 84 is engaged with the vane outer platform 70B and includes a bushing bore 88. The sleeve bore 86 and the bushing bore 88 are configured to receive the plug 82. The plug 82 includes a plug head 83A and a shaft 83B extending from the plug head 83A to a distal end 83C of the shaft 83B. The plug 82 is configured to be secured within the inspection port component 74A and is configured to be removable from the inspection port component 74A to provide access for inspection purposes. The plug 82 itself may be configured to create a seal within the sleeve bore 86 or the bushing bore 88 to prevent escape of core gas from the core gas path 36 during operation of the engine 22. Alternatively (as diagrammatically shown in FIG. 8), the inspection port component 74A may include a seal 90 engaged with the bushing bore 88 to create a seal between the bushing 84 and the plug 82 when the plug 82 is installed within the inspection port component 74A. With the plug 82 removed, the sleeve bore 86 and the bushing bore 88 provide an access passage 76 through the inspection port component 74A and therefore through the structure to which the inspection port component 74A is mounted; i.e., through the outer radial boundary structure of the core gas path 36.

As shown in FIG. 6, the inner inspection port component 74B is engaged with the inner radial boundary structure of the core gas path 36 and defines an access passage 78 through the inner radial boundary structure of the core gas path 36. The respective access passages 76, 78 are configured to allow passage of an inspection scope 42. As stated herein, the inspection port component embodiment diagrammatically shown in FIG. 8 is a non-limiting example of an inspection port component configuration that may be used as the outer inspection port component 74A, or the inner inspection port component 74B, or both.

In some embodiments, the outer inspection port 74A (i.e., the outer inspection port access passage 76) and the inner inspection port 74B (i.e., the inner inspection port access passage 78) maybe radially aligned one another along a radial axis that is perpendicular to the axial centerline 34 of the engine. Radial alignment of the outer and inner inspection ports 74A, 74B is not required, however. In some embodiments, the outer and inner inspection ports 74A, 74B may be aligned along an axis that is tangential to the axial centerline 34 of the engine. Other embodiments of the present disclosure may include any positioning of the outer and inner inspection ports 74A, 74B that allows ready insertion of an inspection scope 42 that provides inspection scope 42 access to a rotor disk (or other componentry) disposed radially inside of the core gas path 36 for inspection purposes.

The outer inspection port 74A may be configured to allow the inner inspection port plug 82A (see FIG. 6) to be removed from the engine 22 through the outer inspection port access passage 76. Once the outer inspection port plug 82A and the inner inspection port plug 82B are removed, an inspection scope 42 can be passed through the inner and outer inspection ports 74A, 74B to gain access to a rotor disk (or other componentry) disposed radially inside of the core gas path 36 for inspection purposes. The aforesaid inspection can be performed simply by removing the respective inspection port plugs 82A, 82B without the need to disassembly the engine 22, and can be performed on an engine 22 under various circumstances; e.g., while the engine 22 is mounted on an aircraft 20, while the aircraft 20 is stationary on an airport tarmac or within a hangar, or at an inspection/repair facility, or the like.

Referring to FIGS. 6 and 8, the second inspection port 92 provides a passage 94 through the outer radial boundary structure of the core gas path 36 and radially through an aligned stator vane 72, 64B thereby providing access to a rotor disk (or other componentry) disposed radially inside of the core gas path 36 for inspection purposes. The passage 94 through the aligned stator vane 72, 64B may be configured as a sealed passage, or a portion of the second inspection port 92 extending through the vane 72, 64B may define a sealed passage, to prevent any passage of gas between the sealed passage and any region within the vane 72, 64B. The second inspection port 92 may be configured like the inspection port described herein and shown in FIG. 8. For example, the plug 182 may be configured to be secured within the second inspection port 92 and may be configured to be removable from the second inspection port 92 to provide access for inspection purposes. The plug 182 itself may be configured to create a sealed inspection port, including the portion of the inspection port extending through the vane 72, 64B; e.g., to prevent the passage of gas between the compartment radially outside of the stator vane stage and the compartment radially inside of the stator vane stage during operation of the engine 22.

In either inspection port embodiment (i.e., first inspection port embodiment 74 or the second inspection port 92), once the inspection scope 42 is inserted through the inspection port embodiment, the inspection scope may be manipulated around the circumference of the rotor stage or stator vane stage to inspect static components, or the rotor stage may be rotated relative to the inspection scope to enable inspection of the entire circumference of the rotor disk 38.

It can be seen from this example that the present disclosure provides a system and inspection method that can be performed in almost any environment and in the case of an aircraft engine application does not require the engine 22 to be removed from the wing of the aircraft 20. The present disclosure system and inspection method can be performed after a trigger event (e.g., an engine performance anomaly) that occurs during engine 22 operation and/or can be performed periodically as part of a maintenance program; e.g., a maintenance program based on aircraft flight cycles - takeoff, cruise, and landing. The inspection data collected with each inspection (i.e., after an event and/or during a periodic inspection) can be tracked to monitor the useful life of the component. This is in contrast to methodologies that require inspection strictly after some number of engine operational hours, or flight cycles, or the like (i.e., "milestone inspections") with no inspection data collected in between. The ease of collecting data under the present disclosure system and method allows for data to be quickly and efficiently collected more often, without the need for engine 22 removal from the aircraft 20. Hence, the present disclosure system and inspection methodology may be used as a replacement for conventional milestone inspections or in coordination with conventional milestone inspections. The inspection data collected with each inspection under the present disclosure system and inspection methodology may also be used for predicting the useful life of components. Component useful life data in an aircraft powerplant application can be tremendously useful in managing aircraft fleets and avoidance of safety issues. In addition, the present disclosure can provide component inspection data almost on a real-time basis (e.g., it does not require a body of empirical data collected from a plurality of different components) and mitigates or may avoid component to component variability that could otherwise obscure inspection data. In some embodiments, component inspection data collected periodically can be evaluated to determine trend data that can be used to predict the useful life of a component.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible.

## Claims

1. A gas turbine engine (22), comprising:
a compressor section (26);
a combustor section (28);
a turbine section (30) having a rotor stage (66A,B) and a stator vane stage (64A,B);
a core gas path (36) extending through the compressor section (26), the combustor section (26), and the turbine section (30); and
an inspection port (74, 92) disposed within the turbine section (30), wherein the inspection port (74, 92) is configured to provide access through a portion of the core gas path (36) that extends within the turbine section (30) and to a component disposed radially inside of the portion of the core gas path (36) that extends within the turbine section (30).

2. The gas turbine engine of claim 1, wherein the inspection port (74) includes an outer inspection port (74A) engaged with an outer radial boundary structure of the core gas path (36) that extends within the turbine section (30), and an inner inspection port (74B) engaged with an inner radial boundary structure of the core gas path (36) that extends within the turbine section (30).

3. The gas turbine engine of claim 2, wherein the outer inspection port (74A) includes an outer inspection port access passage (76) and an outer inspection port plug (82A), and the inner inspection port (74B) includes an inner inspection port access passage (78) and an inner inspection port plug (82B), optionally wherein the outer inspection port access passage (76) and the inner inspection port access passage (78) are aligned with one another

4. The gas turbine engine of claim 2 or 3, wherein the outer radial boundary structure of the core gas path (36) that extends within the turbine section (30) includes an engine case (32).

5. The gas turbine engine of claim 2, 3 or 4, wherein the outer radial boundary structure of the core gas path (36) that extends within the turbine section (30) includes a stator vane outer platform (70B).

6. The gas turbine engine of any of claims 2 to 5, wherein the inner radial boundary structure of the core gas path (36) that extends within the turbine section (30) includes a stator vane inner platform (70A).

7. The gas turbine engine of any of claims 2 to 6, wherein the outer inspection port (74A) and the inner inspection port (74B) are disposed circumferentially between a pair of adjacent vanes (72) of the stator vane stage (64A,B).

8. The gas turbine engine of any of claims 1 to 6, wherein at least a portion of the inspection port (74) extends through a vane (72) of the stator vane stage (64A,B).

9. The gas turbine engine of claim 8, wherein the at least said portion of the inspection port (74) extending through the vane (72) of the stator vane stage (64A,B), or the vane (72), defines a passage configured to prevent transfer of gas between the passage and an interior region of the vane (72).

10. A method of inspecting a component within a gas turbine engine (22), wherein the component comprises a solid metallic material, the method comprising:
extending a transducer (52) through an inspection port (74) that provides access through a core gas path (36) of the gas turbine engine (22) to a component disposed radially inside of the core gas path (36), wherein the transducer (52) is configured to perform an inspection of a metallic component disposed radially inside of the core gas path (36);
providing a baseline inspection response signal that is produced by using the transducer (52) to perform an initial inspection of the metallic component, the initial inspection including transmitting a first initial signal into the metallic component and sensing the metallic component for a second initial signal produced as a result of the first initial signal being transmitted into the metallic component, wherein the baseline inspection response signal is representative of the second initial signal and is unique to the metallic component;
using the transducer (52) to inspect the metallic component, the inspection including transmitting a first signal into the metallic component and sensing the metallic component for a second signal produced as a result of the first signal being transmitted into the metallic component, and producing an inspection response signal representative of the second signal; and
evaluating the inspection response signal to determine the presence or absence of a defect in the metallic component using the baseline response signal.

11. The method of claim 10, wherein the inspection port (74) includes an outer inspection port (74A) engaged with an outer radial boundary structure of the core gas path (36), and an inner inspection port (74B) engaged with an inner radial boundary structure of the core gas path (36).

12. The method of claim 11, wherein the outer inspection port (74A) includes an outer inspection port access passage (76) and an outer inspection port plug (82A), and the inner inspection port (74B) includes an inner inspection port access passage (78) and an inner inspection port plug (82B), optionally wherein the outer inspection port access passage (76) and the inner inspection port access passage (78) are aligned with one another

13. The method of claim 11 or 12, wherein the outer radial boundary structure of the core gas path (36) includes an outer casing (32) and a stator vane outer platform (70B) and/ or wherein the inner radial boundary structure of the core gas path (36) includes a stator vane inner platform (70A).

14. The method of claim 11, 12 or 13, wherein the outer inspection port (74A) and the inner inspection port (74B) are disposed circumferentially between a pair of adjacent vanes (72) within a stator vane stage (64A,B).

15. The method of any of claims 10 to 13, wherein at least a portion of the inspection port (74) extends through a vane (72) of a stator vane stage (64A,B), and/or wherein the component is a disk (68A,B) of a rotor stage (66A,B).
